# EUROPEAN PATENT APPLICATION

(11) **EP 1 970 594 A2**
(43) Date of publication of application: **17.09.2008**
(21) Application number: 07122037.0
(22) Date of filing: 30.11.2007
(51) Int. Cl.: F16F 9/12, F16F 15/173

(54) **Power transmission device, drive transmitting apparatus of image forming apparatus using the same, and image forming apparatus using the same**

(30) Priority: 16.03.2007 KR 20070026273
(71) Applicant: Samsung Electronics Co., Ltd., Suwon-si, Gyeonggi-do 442-742 (KR)
(72) Inventor: Cha, Douk-soon, Seongnam-si Gyeonggi-do (KR)
(74) Representative: Davies, Robert Ean

(57) **Abstract**

A power transmitting device (20) that allows a rotation driving unit (31) to stably rotate at a constant angular velocity while overcoming an effect of backlash of a gear which is an element to transmitting power, a drive transmitting apparatus of an image forming apparatus that employs the power transmitting device, and an image forming apparatus that employs the power transmitting device. The power transmitting device includes a weighted rotor (21) that has a weight larger than the rotation object (10) and is connected to the rotation object to rotate along with the rotation object; and a viscous member to reduce a rotation force of the weighted rotor due to a viscosity of a fluid filled therein. The power transmitting device prevents change of the rotation speed of the rotation object due to a gear backlash by using the weight of a weighted rotor and a viscous braking force of a damping grease, and the anti-backlash function can be maintained during a long period of operation. Accordingly, when the power transmitting device is applied to a drive transmitting apparatus of an image forming apparatus, an image forming apparatus forming stable images can be realized.

## Description

The present invention relates to a power transmission device that allows a rotational driving unit to rotate at a constant angular velocity without being affected by a backlash of the gear which is a drive transmitting element, a drive transmitting apparatus of an image forming apparatus that uses the power transmission device, and an image forming apparatus that employs the drive transmitting apparatus having the power transmission device.

Conventional image forming apparatuses generally perform developing, transferring, and fixing processes to form an image with respect to a printing medium. In order to perform the above processes, the image forming apparatus includes rotational driving units such as a rotatably mounted photosensitive drum, developing rollers, transferring rollers, and fixing rollers. Such rotational driving units are driven by receiving driving power from a driving power source through a drive transmitting apparatus.

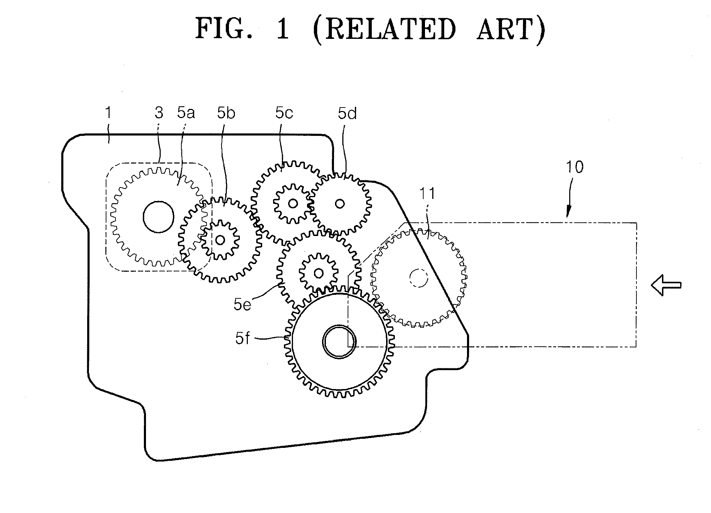

FIG. 1 is a side view of a conventional drive transmitting apparatus for an image forming apparatus. Referring to FIG. 1, the conventional image forming apparatus includes a frame 1 and a plurality of gear units 5a, 5b, 5c, 5d, 5e, and 5f which are rotatably mounted on the frame 1, wherein the gear units are geared having a predetermined gear ratio with each other, and transmit power by rotation. Thus, a driving power supplied from a driving power source 3 mounted on the frame 1 is transmitted to a rotational driving unit 10 through the multiple gear units 5a, 5b, 5c, 5d, 5e, and 5f. At this point, since the gear units 5a, 5b, 5c, 5d, 5e, and 5f do not include an additional backlash compensation structure, a variation of rotation speed can occur.

As an example of the rotational driving unit 10, a developing unit, which can be attachably and detachably mounted on the image forming apparatus, is described. In this case, a gear 11 formed on a side of a photosensitive drum is geared with the gear unit 5f when the developing unit is attached, and is separated from the gear unit 5f when the developing unit is detached.

If a drive transmitting apparatus is configured as described above, the rotation speed of the photosensitive drum varies due to the variation of load onto the developing unit or the backlash of the gear unit. The variation of rotation speed of the photosensitive drum causes a banding problem on an image, that is, lines are periodically drawn in a width direction of the image, thereby reducing the quality of the image.

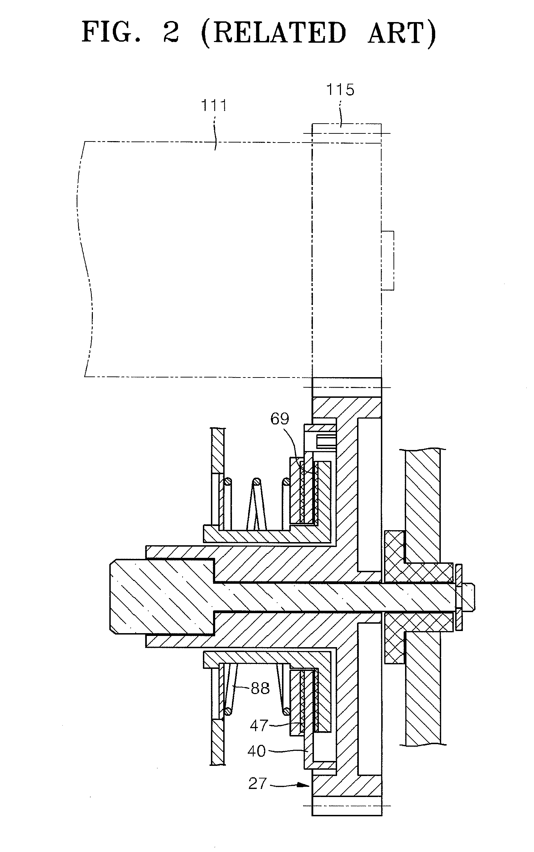

To overcome the above problem, a conventional gear anti-backlash device as illustrated in FIG. 2 has been disclosed in Korean Patent Publication No. 2005-0098551. FIG. 2 is a cross-sectional view of a conventional drive transmitting apparatus that employs an anti-backlash gear. In the gear anti-backlash device of FIG. 2, when power is transmitted from a gear unit 115 of a photosensitive drum 111 which is a rotation object to a gear unit 27 of a side of a driving power source, friction pads 47 and 69 are tightly pressed on a moving unit 40 that rotates together with the gear unit 27 using a spring 88 so that a frictional braking force is applied to the rotation of the gear unit 27. In this case, since the gear unit 27 must rotate by overcoming the strong frictional braking force, even though there is a slight load variation during rotation, a shaking between the gears due to the backlash does not generally occur. Thus, a stable constant angular velocity can be maintained.

However, as the gear anti-backlash device described above uses frictional braking force of the friction pads 47 and 69, the backlash function of the friction pads 47 and 69 is reduced when the friction pads 47 and 69 are worn out. That is, in the early stage of use of the friction pads 47 and 69, the backlash prevention can be achieved since there is a sufficient friction force. However, after a period of time of operation, when the frictional braking force of the friction pads 47 and 69 is reduced, the backlash prevention cannot be properly performed since there is not sufficient frictional force.

Therefore, in order to overcome the above problem, there is a need to develop an anti-backlash device for a gear using a new method in which a rapid reduction of the anti-backlash function, like the wearing of the pads, does not occur.

The present invention provides a power transmitting device that can remove causes of rapid reduction of anti-backlash function such as wearing of a member and can perform a smooth anti-backlash function, a drive transmitting apparatus of an image forming apparatus that uses the power transmitting device, and an image forming apparatus that uses the drive transmitting apparatus having the power transmitting device.

Additional aspects and utilities of the present invention will be set forth in part in the description which follows and, in part, will be obvious from the description, or may be learned by practice of the invention.

According to a first aspect of the present invention, there is provided a power transmitting device connected to a driving power source, the power transmitting device including a weighted rotor that has a weight larger than that of the rotation object and is connected to the rotation object to rotate along with the rotation object.

The power transmission device may further include a viscous member to reduce the rotation force of the weighted rotor due to a viscosity of a fluid filled therein.

A rotational force on the rotation object may greater than a combination of the braking force of the viscous fluid and the weight of the weighted rotor in order to allow the rotation object to rotate.

According to a second aspect of the present invention, there is provided a drive transmitting apparatus for an image forming apparatus, in which a rotation object of a rotation driving unit of the image forming apparatus is rotated using a driving power source, the drive transmitting apparatus including a driving gear to connect the driving power source to the rotation object, and a power transmitting device to prevent change of the rotation speed change of the rotation object due to gear backlash, wherein the power transmitting device includes a weighted rotor that has a weight larger than that of the rotation object and is connected to the rotation object to rotate along with the rotation object.

The power transmission device may further include a viscous member to reduce the rotation force of the weighted rotor due to a viscosity of a fluid filled therein.

A wherein a rotational force on the rotation object may be greater than a combination of the braking force of the viscous fluid and the weight of the weighted rotor in order to allow the rotation object to rotate.

According to a third aspect of the present invention, there is provided an image forming apparatus including a photosensitive drum to form an image on an outer circumference surface thereof and to transfer the image to a paper, a driving gear to connect a driving power source to a rotation object, and a power transmitting device to prevent change of the rotation speed of the rotation object due to gear backlash, wherein the power transmitting device includes a weighted rotor that has a weight larger than that of the rotation object and is connected to the rotation object to rotate along with the rotation object.

The image forming apparatus may further include a viscous member to reduce a the rotation force of the weighted rotor due to a viscosity of a fluid filled therein.

A rotational force on the photosensitive drum may be greater than a combination of the braking force of the viscous fluid and the weight of the weighted rotor in order to allow the photosensitive drum to rotate.

The weighted rotor may be formed of a metal.

The viscous member may include a coupling protrusion formed on the weighted rotor, a fixed body having a race to which the coupling protrusion is rotatably coupled, and a viscous fluid filled in the race, and the viscous fluid may be a damping grease.

A gap of 0.05 to 0.1 mm may be formed between an inner wall of the race and the coupling protrusion.

According to a fourth aspect of the present invention, there is provided a power transmitting device, including a fixed body having a race, a rotor rotatably coupled to the fixed body and having a portion thereof inserted in the race, and a viscous member disposed between a portion of the rotor and the race of the fixed body to resist a rotation of the rotor with respect to the fixed body.

The race may include a hollow circular cylinder, and the portion of the rotor may include a protrusion formed in a circular direction to be disposed in the race with a gap.

The viscous member may be filled in the gap.

For a better understanding of the invention, and to show how embodiments of the same may be carried into effect, reference will now be made, by way of example, to the accompanying diagrammatic drawings in which:
FIG. 1 is a side view of a conventional drive transmitting apparatus of an image forming apparatus;
FIG. 2 is a cross-sectional view of a conventional drive transmitting apparatus that employs an anti-backlash gear;
FIG. 3 is a perspective view of a drive transmitting apparatus of an image forming apparatus having a power transmitting device according to and embodiment of the present invention;
FIG. 4 is an exploded perspective view of the power transmitting device of FIG. 3;
FIG. 5 is a cross-sectional view taken along line A-A of FIG. 3; and
FIG. 6 is a schematic drawing of a developing unit of an image forming apparatus that transfers an image onto a paper after developing the image on a photosensitive drum.

Reference will now be made in detail to the embodiments of the present invention, examples of which are illustrated in the accompanying drawings, wherein like reference numerals refer to the like elements throughout. The embodiments are described below in order to explain the present invention by referring to the figures.

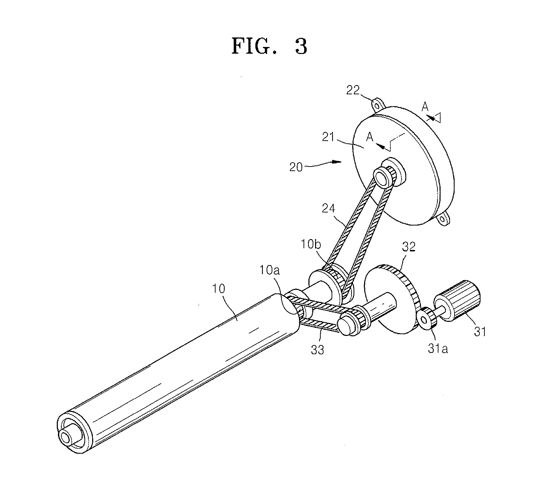

FIG. 3 is a perspective view of a drive transmitting apparatus of an image forming apparatus having a power transmitting device according to an embodiment of the present invention. Referring to FIG. 3, in the present embodiment, as an example of a rotational driving unit included in an image forming apparatus, a photosensitive drum 10 of a developing unit is described. The photosensitive drum 10 is connected to a driving power source 31 by a driving gear 32 and a timing belt 33, which are elements of the drive transmitting apparatus. When, as the drive transmitting apparatus uses a drive power connection structure that uses toothed gears, a backlash can occur between the driving gear 32 and a pinion gear 31 a of the driving power source 31, between the timing belt 33 and the driving gear 32, or between the timing belt 33 and a gear unit 10a of the photosensitive drum 10. In the present embodiment, the photosensitive drum 10 of the developing unit is described as an example of the rotational driving unit, but the present invention is not limited thereto. That is, the present invention can be applied to all units that are rotationally driven to perform all processes of developing, transferring, and fixing of an image forming apparatus. The image forming apparatus includes a paper feeding unit, a printing unit including the photosensitive drum 10, and a discharging unit. The paper feeding unit, the discharging unit, and components of the printing unit are well known, and thus detailed descriptions thereof will be omitted.

A power transmitting device 20 to prevent rotation speed variation due to backlash during the rotation of the photosensitive drum 10 includes a weighted rotor 21 connected to another gear unit 10b, which is provided on the axis of the photosensitive drum 10, through another timing belt 24. The weighted rotor 21 is formed of a metal such as brass or steel to make it heavier than the photosensitive drum 10. In order to rotate, the photosensitive drum 10 has to overcome a large weight of the weighted rotor 21.

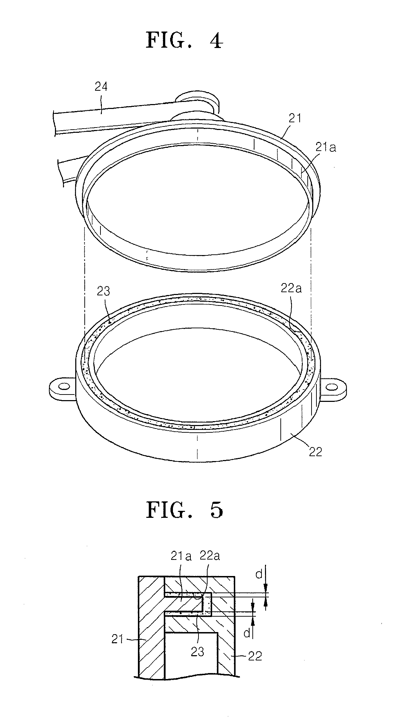

The weighted rotor 21 is not in a state to freely rotate, but is supported to not easily rotate due to a viscous member that provides a braking force using viscosity of a fluid. FIG. 4 is an exploded perspective view of the power transmitting device of FIG. 3. As depicted in FIG. 4, a coupling protrusion 21 a of the weighted rotor 21 is inserted into a race 22a of the fixed body 22 which is an element of the viscous member, and is rotatably supported by the race 22a of the fixed body 22. A viscous liquid such as a damping grease 23 is filled in the race 22a to support the rotation of the weighted rotor 21. Accordingly, in order to rotate the weighted rotor 21, a rotation force greater than the viscosity of the damping grease 23 must be applied. From a viewpoint of the photosensitive drum 10 which is the rotation object, the photosensitive drum 10 can rotate when a rotation force greater than not only the weight of the weighted rotor 21 but also the viscous braking force of the viscous fluid applied to the weighted rotor 21 is applied to the photosensitive drum 10. Thus, a degree of disturbance due to a gear backlash cannot change the rotation speed of the photosensitive drum 10. That is, the photosensitive drum 10 rotates when a rotation force that can overcome the weight of the weighted rotor 21 and the viscous braking force of the damping grease 23 is applied to the photosensitive drum 10. Therefore, in order to change the rotation speed of the photosensitive drum 10, a very large rotation force that can greatly overcome the weight of the weighted rotor 21 and the viscous braking force of the damping grease 23 must be applied to the photosensitive drum 10. That is, in the present invention, speed change due to gear backlash is minute, and thus, does not significantly affect the rotation speed of the photosensitive drum 10.

Since change of the rotation speed due to the gear backlash can be prevented, the photosensitive drum 10 can be rotated at a constant angular velocity when a developing process is performed. Accordingly, poor image quality problems such as image banding can be fundamentally prevented.

In the present embodiment, unlike the in conventional gear anti-backlash structure, since the weight of the weighted rotor 21 and the viscous braking force of the damping grease 23 are used, there is no wearing of a braking member that performs as a brake. Thus, there is no rapid reduction of a braking function when the power transmitting device is used during a long period of operation.

FIG. 5 is a cross-sectional view taken along line A-A of FIG. 3. As illustrated in FIG. 5, a gap d of approximately 0.05 to 0.10 mm may be provided between the coupling protrusion 21 a of the weighted rotor 21 and the race 22a of the fixed body 22. If the gap d is less than 0.05 mm, the insertion of the weighted rotor 21 may be too tight to rotate freely, and if the gap d exceeds 0.1 mm, the damping grease 23 may easily leak, and in a more extreme case, the weighted rotor 21 may become detached from the fixed body 22.

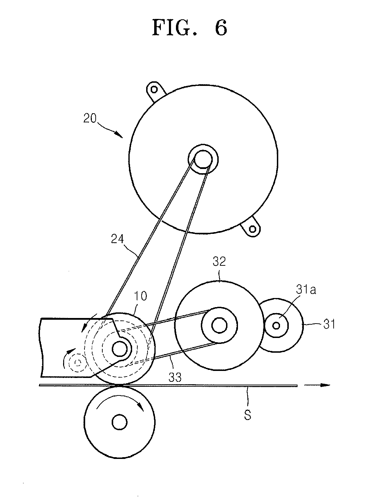

FIG. 6 is a schematic drawing of a developing unit of an image forming apparatus that transfers an image to a sheet of paper S after developing the image on a photosensitive drum. As illustrated in FIG. 6, when the power transmitting device according to the present embodiment is employed to a rotatably drive the photosensitive drum 10, the rotation of the photosensitive drum 10 is very stable when an image developing or transferring process is performed. Therefore, a banding problem, that is, a periodic drawing of lines along a widthwise direction of an image can be prevented.

As described above, a power transmitting device according to an embodiment of the present invention prevents a photosensitive drum from changing rotation speed due to a gear backlash by using the weight of a weighted rotor and a viscous braking force of a damping grease, and the anti-backlash function can be maintained during a long period of operation. Accordingly, when the power transmitting device according to an embodiment of the present invention is applied to a drive transmitting apparatus of an image forming apparatus, an image forming apparatus forming stable images can be realized.

Although a few embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A power transmission device (20) connected to a driving power source (31), the power transmission device comprising:
a weighted rotor (21) that has a weight larger than that of a rotation object (10) and is connected to the rotation object to rotate along with the rotation object.

2. The power transmission device of claim 1, further comprising:
a viscous member (22) to reduce the rotation force of the weighted rotor due to a viscosity of a fluid (23) filled therein.

3. The power transmission device 2, wherein a rotational force on the rotation object is greater than a combination of the braking force of the viscous fluid and the weight of the weighted rotor in order to allow the rotation object to rotate.

4. The power transmission device of any preceding claim, wherein the weighted rotor is formed of a metal.

5. The power transmission device of any preceding claim, wherein the viscous member (22) comprises:
a coupling protrusion (21 a) formed on the weighted rotor (21);
a fixed body (22) having a race (22a) to which the coupling protrusion is rotatably coupled; and
a viscous fluid (23) filled in the race.

6. The power transmission device of claim 5, wherein the viscous fluid is a damping grease.

7. The power transmission device of claim 5 or 6, wherein a gap of 0.05 to 0.1 mm is formed between an inner wall of the race (22a) and the coupling protrusion (21 a).

8. A drive transmitting apparatus of an image forming apparatus in which a rotation object (10) of a rotation driving unit of the image forming apparatus is rotated using a driving power source (31), the drive transmitting apparatus comprising:
a driving gear (32) to connect the driving power source (31) to the rotation object (10); and
a power transmission device connected to the driving power source,
wherein the power transmission device comprises:
a weighted rotor (21) that has a weight larger than that of the rotation object (10) and is connected to the rotation object to rotate along with the rotation object.

9. The drive transmitting apparatus of claim 8, further comprising:
a viscous member (22) to reduce the rotation force of the weighted rotor due to a viscosity of a fluid filled therein.

10. The drive transmitting apparatus of claim 9 wherein a rotational force on the rotation object is greater than a combination of the braking force of the viscous fluid and the weight of the weighted rotor in order to allow the rotation object to rotate.

11. The drive transmitting apparatus of claim 8, 9 or 10 wherein the weighted rotor (21) is formed of a metal.

12. The drive transmitting apparatus of any of claims 8-11, wherein the viscous member comprises:
a coupling protrusion (21 a) formed on the weighted rotor;
a fixed body (22) having a race (22a) to which the coupling protrusion is rotatably coupled; and
a viscous fluid filled in the race.

13. The drive transmitting apparatus of claim 12, wherein the viscous fluid is a damping grease.

14. The drive transmitting apparatus of any of claims 8-13, wherein a gap of 0.05 to 0.1 mm is formed between an inner wall of the race (22a) and the coupling protrusion (21 a).

15. An image forming apparatus, comprising:
a photosensitive drum (10) to form an image on an outer circumference surface thereof and to transfer the image to a paper;
a driving gear (32) to connect a driving power source to a rotation object; and
a power transmitting device (20) connected to the driving power source,
wherein the power transmitting device comprises:
a weighted rotor (21) that has a weight larger than that of the rotation object and is connected to the rotation object to rotate along with the rotation object.

16. The image forming apparatus of claim 15, further comprising:
a viscous member (22) to reduce a the rotation force of the weighted rotor due to a viscosity of a fluid filled therein.

17. The image forming apparatus of claim 16, wherein a rotational force on the photosensitive drum is greater than a combination of the braking force of the viscous fluid and the weight of the weighted rotor in order to allow the photosensitive drum to rotate.

18. The image forming apparatus of any of claims 15-17, wherein the weighted rotor is formed of a metal.

19. The image forming apparatus of any of claims 15-18, wherein the viscous member comprises:
a coupling protrusion (21 a) formed on the weighted rotor;
a fixed body (22) having a race to which the coupling protrusion is rotatably coupled; and
a viscous fluid (23) filled in the race.

20. The image forming apparatus of any of claims 15-19, wherein the viscous fluid is a damping grease.

21. The image forming apparatus of any of claims 15-20, wherein a gap of 0.05 to 0.1 mm is formed between an inner wall of the race and the coupling protrusion.

22. A power transmitting device, comprising:
a fixed body (22) having a race (22a);
a rotor (21) rotatably coupled to the fixed body and having a portion (21 a) thereof inserted in the race; and
a viscous member (23) disposed between a portion of the rotor and the race of the fixed body to resist a rotation of the rotor with respect to the fixed body.

23. The power transmitting device of claim22, wherein:
the race (22a) comprises a hollow circular cylinder; and
the portion (21 a) of the rotor (21) comprises a protrusion formed in a circular direction to be disposed in the race with a gap.

24. The power transmitting device of claim23, wherein the viscous member is filled in the gap.
